# EUROPÄISCHE PATENTSCHRIFT

(11) **EP 1 025 148 B1**
(45) Veröffentlichungstag und Bekanntmachung des Hinweises auf die Patenterteilung: **06.02.2002**
(21) Anmeldenummer: 98948660.0
(22) Anmeldetag: 27.10.1998
(51) Int. Cl.: C08J 9/12

(54) **MIKROZELLULÄRE DUROMER-SCHÄUME UND VERFAHREN ZU DEREN HERSTELLUNG**
MICROCELLULAR DUROMER-FOAMS AND METHOD FOR PRODUCING THE SAME
MOUSSES DUROMERES MICROCELLULAIRES ET PROCEDE PERMETTANT DE LES PRODUIRE

(30) Priorität: 31.10.1997 CH 251797
(43) Veröffentlichungstag der Anmeldung: 09.08.2000
(73) Patentinhaber: Lonza AG, 4052 Basel (CH)
(72) Erfinder: DAUM, Ulrich, CH-4114 Hofstetten (CH); RAKUTT, Dietmar, CH-6330 Cham (CH)
(86) Internationale Anmeldenummer: CH9800457
(87) Internationale Veröffentlichungsnummer: WO9923142

(56) Entgegenhaltungen:
- WO-A1-92/17533
- US-A- 4 761 256
- US-A- 5 116 883

## Beschreibung

Die vorliegende Erfindung betrifft mikrozelluläre Schaumstoffe aus Duromeren ("Thermosets") sowie ein Verfahren zu deren Herstellung. Sie betrifft weiterhin treibmittelhaltige teilvernetzte Duromere als Zwischenprodukt im erfindungsgemässen Verfahren.

Die bisher am weitesten verbreiteten Schaumstoffe besitzen relativ grosse Zellen in der Grössenordnung von etwa 50-1000 µm und Polyurethane oder thermoplastische Kunststoffe als Matrixmaterial. Die grossen Zellen bewirken eine Verringerung des Quotienten aus (z. B. Zug-) Festigkeit und Dichte unter den Wert des entsprechenden kompakten Werkstoffs, d. h. mit zunehmender Porosität nimmt die Festigkeit schneller ab als die Dichte. Für viele Anwendungen wäre dagegen der entgegengesetzte Effekt wünschenswert, weil dann eine echte Materialeinsparung möglich wäre bzw. mit dem gleichen Materialeinsatz höhere Kräfte bewältigt werden könnten.
Es ist bekannt, dass durch eine Reduktion der Zellengrösse auf Werte in der Grössenordnung von 10 µm oder weniger die Festigkeit von Schaumstoffen teilweise drastisch erhöht werden kann (US-A-4 473 665, US-A-5 160 674). Für solche Schaumstoffe hat sich die Bezeichnung "mikrozelluläre Schaumstoffe" eingebürgert. Diese bekannten mikrozellulären Schaumstoffe basieren auf thermoplastischen Matrixmaterialien und ihre Herstellungsverfahren sind nur für solche anwendbar.
US-A-5 116 883 beschreibt micro zelluläre offenzellige Schaumstoffe auf Basis eines multifunktionellen Epoxid harzes. Es werden auch Gel - Zwischenprodukte in flüssigen Kohlendioxia beschrieben.
Mit der Verwendung thermoplastischer Matrixmaterialien sind jedoch wesentliche Nachteile verbunden. Diese sind teils verfahrensbedingt, teils betreffen sie die Eigenschaften der so erhältlichen Schaumstoffe. Ein verfahrensbedingter Nachteil ist die Notwendigkeit
hoher Drücke bei der Formgebung wegen der hohen Viskosität der Polymerschmelzen. Dies erfordert die Verwendung von Extrudern. Der wesentlichste Nachteil besteht jedoch
in der begrenzten Temperaturbeständigkeit der thermoplastischen Schaumstoffe. Duromere ("Thermosets") sind demgegenüber bei niedrigen Drücken verarbeitbar, weil bei ihnen die endgültige Polymerisation bzw. Vernetzung erst nach der Formgebung stattfindet. Zudem liegt ihre maximale Einsatztemperatur höher und erreicht beispielsweise bei Polytriazinharzen Werte bis ca. 400 °C. Durch die dreidimensionale Vernetzung weisen sie auch höhere Festigkeiten als die meisten Thermoplaste auf, dagegen sind sie in kompaktem Zustand spröder als jene. Es sind zwar auch einige Schaumstoffe auf Duromerbasis be- kannt, diese weisen jedoch die eingangs genannten grossen Zellen ― mit den daraus resultierenden schlechten Festigkeitswerfen ― auf und sind zudem meistens offenzellig. Aufgabe der vorliegenden Erfindung war daher, mikrozelluläre Schaumstoffe aus Duromeren bereitzustellen, welche die bekannten guten Eigenschaften der duromeren Matrixmaterialien mit den günstigen Effekten des mikrozellulären Zustands verbinden.

Erfindungsgemäss wird diese Aufgabe durch die Schaumstoffe nach Patentanspruch 1 gelöst.

Es wurde gefunden, dass durch ein geeignetes Herstellungsverfahren mikrozelluläre Hartschaumstoffe mit einer Matrix aus vernetzten Duromeren und einer scheinbaren Dichte von 20 bis 95% der Dichte des kompakten Matrixmaterials erhalten werden können. "Mikrozellulär" bedeutet in diesem Fall einen mittleren Zelldurchmesser von weniger als 50 µm, vorzugsweise von weniger als 25 µm. Die erfindungsgemässen Schaumstoffe sind vorwiegend geschlossenzellig.

Vorzugsweise ist das Matrixmaterial der erfindungsgemässen mikrozellulären Schaumstoffe ausgewählt aus der Gruppe bestehend aus Polytriazinharzen, Epoxidharzen, Phenolharzen, Polyimidharzen und Kombinationen bzw. "Blends" zweier oder mehrerer dieser Harze.

Besonders bevorzugt sind Matrixmaterialien aus durch Cyclotrimerisation eines oder mehrerer aromatischer Cyanate erhaltenen Polytriazinharzen.

Ganz besonders bevorzugt sind Matrixmaterialien aus Polytriazinharz, welches durch Cyclotrimerisation eines durch Cyanierung eines Novolacs hergestellten aromatischen Cyanats erhalten wurde. Diese aromatischen Cyanate sind beispielsweise unter der Bezeichnung Primaset™ PT Resins von Lonza AG erhältlich.

Die erfindungsgemässen mikrozellulären Schaumstoffe können dadurch hergestellt werden, dass das präpolymerisierte bzw. vorvernetzte Duromere unter erhöhtem Druck und erhöhter Temperatur mit einem physikalischen Treibmittel imprägniert, dann bei einem niedrigeren Druck und gegebenenfalls höherer Temperatur expandiert und schliesslich vollständig ausgehärtet wird, wobei die Temperatur während des Expansions- und Aushärtungsvorgangs stets unterhalb der aktuellen Glastemperatur des Materials liegt. Hierbei kann die Präpolymerisation bzw. Vorvernetzung in einem völlig getrennten Verfahrensschritt oder unmittelbar vor der Imprägnierung mit dem Treibmittel erfolgen. Das imprägnierte Matrixmaterial kann unter Druck abgekühlt und so in einen lagerstabilen Zustand mit physikalisch gelöstem Treibmittel übergeführt werden, so dass die Expansion in einem räumlich und/oder zeitlich getrennten Schritt erfolgt. Alternativ kann die Expansion unmittelbar nach der Imprägnierung erfolgen. Wesentlich für den Erfolg des erfindungsgemässen Verfahrens ist der richtige Grad der Präpolymerisation vor der Imprägnierung. Ist der Polymerisationsgrad zu gering, dann wird ein konventioneller Schaum erhalten, bei zu weitgehender Präpolymerisation bildet sich überhaupt kein Schaumstoff, sondern das Material wird allenfalls unter Rissbildung mehr oder weniger gesprengt. Die korrekten Bedingungen bei der Präpolymerisation hängen von dem verwendeten Duromeren ab und müssen gegebenenfalls durch Versuche ermittelt werden. Teilvernetzte Duromere sind in den Ansprüchen 8 und 9 definiert
Ebenfalls ist es wichtig, dass während der Expansion und der Aushärtung die Temperatur stets unterhalb der Glastemperatur bleibt. Die Glastemperatur wird durch das gelöste Treibmittel herabgesetzt, d. h. das Treibmittel wirkt als "Weichmacher", und steigt während der Expansion und der Aushärtung an.

Als Treibmittel eignen sich beispielsweise niedrige Kohlenwasserstoffe, insbesondere C₁₋₆-Alkane oder C₃₋₆-Cycloalkane, niedrige halogenierte Kohlenwasserstoffe oder Kohlendioxid. Wesentlich ist das Vorhandensein eines gewissen gegenseitigen Löslichkeit, d. h. Stoffe ohne Lösungsmitteleigenschaften wie beispielsweise Stickstoff oder Edelgase sind ungeeignet.

Vorzugsweise wird die Imprägnierung mit dem Treibmittel bei einem Druck und einer Temperatur im Bereich des kritischen Punktes des Treibmittels oder darüber durchgeführt.

Besonders bevorzugt als Treibmittel ist Kohlendioxid.
Die folgenden Beispiele verdeutlichen die Ausführung der Erfindung, ohne dass darin eine Einschränkung zu sehen ist.

### Beispiel 1

Ein aromatisches Cyanat auf Basis eines Phenol-Formaldehyd-Kondensationsprodukts (Lonza Primaset™ PT 60) wurde bei 160 °C 30 min präpolymerisiert ("geliert"). Das so erhaltene teilvernetzte Material wurde bei 46 °C und 96 bar 16 h mit Kohlendioxid imprägniert, wobei sich eine Gewichtszunahme um 5,45% ergab. Das imprägnierte Zwischenprodukt wurde dann bei 180 °C in 75 s expandiert und lieferte einen Hartschaumstoff mit einer Dichte von 1,240 g/cm³.

### Beispiel 2

Es wurde wie in Beispiel 1 verfahren, jedoch betrug die Präpolymerisationstemperatur 170 °C. Die Gewichtszunahme bei der Imprägnierung betrug 6,03% und die Dichte des Schaumstoffs 1,173 g/cm³.

### Beispiel 3

Es wurde wie in Beispiel 1 verfahren, jedoch betrug die Präpolymerisationstemperatur 180 °C. Die Gewichtszunahme bei der Imprägnierung betrug 4,52% und die Dichte des Schaumstoffs 1,233 g/cm³.

### Beispiel 4

Ein aromatisches Cyanat auf Basis eines Phenol-Formaldehyd-Kondensationsprodukts (Lonza Primaset™ PT 60) wurde bei 180 °C 120 min präpolymerisiert ("geliert"). Das so erhaltene teilvernetzte Material wurde bei 30 °C und 120-140 bar 15 h mit Kohlendioxid imprägniert, wobei sich eine Gewichtszunahme um 7,96% ergab. Das imprägnierte Zwischenprodukt wurde dann bei 180 °C in 120 s expandiert und lieferte einen Hartschaumstoff mit einer Dichte von 1,189 g/cm³.

## Patentansprüche

1. Vorwiegend geschlossenzellige mikrozelluläre Hartschaumstoffe mit einer Matrix aus vemetzten Duromeren und einer scheinbaren Dichte von 20 bis 95% der Dichte des kompakten Matrixmaterials.

2. Mikrozelluläre Hartschaumstoffe nach Anspruch 1, **dadurch gekennzeichnet, dass** das Matrixmaterial aus Polytriazinharz, Epoxidharz, Phenolharz, Polyimidharz oder einer Kombination von zweien oder mehreren dieser Harze besteht

3. Mikrozelluläre Hartschaumstoffe nach Anspruch 2, **dadurch gekennzeichnet, dass** das Matrixmaterial aus einem durch Cyclotrimerisation eines oder mehrerer aromatischer Cyanate erhaltenen Polytriazinharz besteht.

4. Mikrozelluläre Hartschaumstoffe nach Anspruch 3, **dadurch gekennzeichnet, dass** das Polytriazinharz durch Cyclotrimerisation eines durch Cyanierung eines Novolacs hergestellten aromatischen Cyanats erhalten wurde.

5. Verfahren zur Herstellung von mikrozellulären Hartschaumstoffen gemäss Ansprüchen 1 bis 4, **dadurch gekennzeichnet, dass** das teilvernetzte Matrixmaterial unter erhöhtem Druck und einer Temeratur zwischen Raumtemperatur und der Aushärtungstemperatur mit einem physikalischen Treibmittel imprägniert, in einem weiteren Schritt durch Druckerniedrigung und/oder Temperaturerhöhung expandiert und schliesslich durch Erwärmen auf eine Temperatur unterhalb der Glastemperatur vollständig ausgehärtet wird.

6. Verfahren nach Anspruch 5, **dadurch gekennzeichnet, dass** die Imprägnierung mit dem Treibmittel bei einem Druck und einer Temperatur im Bereich des kritischen Punktes des Treibmittels oder darüber erfolgt

7. Verfahren nach Anspruch 5 oder 6, **dadurch gekennzeichnet, dass** als Treibmittel Kohlendioxid eingesetzt wird.

8. Teilvernetzte Duromere, ausgenommen solche auf Basis von Epoxidharzen, mit 1 bis 20 Gew.-% physikalisch gelöstem Treibmittel als Zwischenprodukte im Verfahren gemäss Ansprüchen 5 bis 7.

9. Teilvernetzte Duromere nach Anspruch 8, **dadurch gekennzeichnet, dass** das Treibmittel Kohlendioxid ist.

## Claims

1. Microcellular rigid foams, predominantly of closed-cell type, with a matrix composed of crosslinked thermosets and with an apparent density of from 20 to 95% of the density of the compact matrix material.

2. Microcellular rigid foams according to Claim 1, **characterized in that** the matrix material is composed of polytriazine resin, epoxy resin, phenolic resin, polyimide resin or a combination of two or more of these resins.

3. Microcellular rigid foams according to Claim 2, **characterized in that** the matrix material is composed of a polytriazine resin obtained by cyclotrimerizing one or more aromatic cyanates.

4. Microcellular rigid foams according to Claim 3, **characterized in that** the polytriazine resin was obtained by cyclotrimerizing an aromatic cyanate prepared by cyanating a novolak.

5. Process for producing microcellular rigid foams according to Claims 1 to 4, **characterized in that**, at elevated pressure and at a temperature between room temperature and the curing temperature, the partially crosslinked matrix material is impregnated with a physical blowing agent, is expanded in a further step by lowering the pressure and/or increasing the temperature and finally is fully cured by heating to a temperature below the glass transition point.

6. Process according to Claim 5, **characterized in that** the impregnation with the blowing agent takes place at a pressure and temperature in the region of the critical point of the blowing agent or thereabove.

7. Process according to Claim 5 or 6, **characterized in that** carbon dioxide is used as blowing agent.

8. Partially crosslinked thermosets, with the exception of those based on epoxy resins, which have from 1 to 20% by weight of physically dissolved blowing agent and are intermediates in the process according to Claims 5 to 7.

9. Partially crosslinked thermosets according to Claim 8, **characterized in that** the blowing agent is carbon dioxide.

## Revendications

1. Mousses rigides microcellulaires essentiellement à cellules fermées, comportant une matrice à base de duromères réticulés et ayant une densité apparente représentant de 20 à 95% de la densité du matériau compact de la matrice.

2. Mousses rigides microcellulaires selon la revendication 1, **caractérisées en ce que** le matériau de la matrice consiste en une résine polytriazine, une résine époxy, une résine phénolique, une résine polyimide ou une association de deux ou plus de ces résines.

3. Mousses rigides microcellulaires selon la revendication 2, **caractérisées en ce que** le matériau de la matrice consiste en une résine polytriazine obtenue par cyclotrimérisation d'un ou plusieurs cyanates aromatiques.

4. Mousses rigides microcellulaires selon la revendication 3, **caractérisées en ce que** la résine polytriazine a été obtenue par cyclotrimérisation d'un cyanate aromatique produit par cyanuration d'une Novolaque.

5. Procédé pour la fabrication de mousses rigides microcellulaires selon les revendications 1 à 4, **caractérisé en ce que** le matériau de matrice partiellement réticulé est imprégné avec un porogène physique, sous une pression élevée et à une température comprise entre la température ambiante et la température de durcissement, expansé, dans une autre étape, par abaissement de la pression et/ou élévation de la température et enfin durci complètement par chauffage à une température inférieure à la température de transition vitreuse.

6. Procédé selon la revendication 5, **caractérisé en ce que** l'imprégnation avec le porogène s'effectue sous une pression et à une température dans la plage du point critique du porogène ou au-dessus.

7. Procédé selon la revendication 5 ou 6, **caractérisé en ce qu'**on utilise comme porogène le dioxyde de carbone.

8. Duromères partiellement réticulés, à l'exclusion de ceux à base de résines époxy, comportant de 1 à 20% en poids de porogène physique dissous, en tant que produits intermédiaires dans le procédé selon les revendications 5 à 7.

9. Duromères partiellement réticulés selon la revendication 8, **caractérisés en ce que** le porogène est le dioxyde de carbone.
